# FASCICULE DE BREVET EUROPEEN

(11) **EP 1 660 788 B1**
(45) Date de publication et mention de la délivrance du brevet: **14.02.2007**
(21) Numéro de dépôt: 04767735.6
(22) Date de dépôt: 20.07.2004
(51) Int. Cl.: F16H 19/00, F16H 35/02

(54) **REDUCTEUR COAXIAL D'AIDE AU DEMARRAGE A RAPPORT CROISSANT JUSQU'A LA PRISE DIRECTE**
KOAXIALES STARTHILFE-UNTERSETZUNGSGETRIEBE MIT ZUNEHMENDER ÜBERSETZUNG BIS ZU DIREKTANTRIEB
START-UP ASSISTANCE COAXIAL GEAR REDUCER WITH INCREASING RATIO UP TO DIRECT DRIVE

(30) Priorité: 04.08.2003 FR 0309582
(43) Date de publication de la demande: 31.05.2006
(73) Titulaire: PH. B INNOVATIONS Sarl, 67000 Strasbourg (FR)
(72) Inventeur: Baggio, Jean-Marc, 57360 Amneville (FR)
(74) Mandataire: Ocvirk, Philippe
(86) Numéro de dépôt international: PCT/FR2004/001914
(87) Numéro de publication internationale: WO 2005/022002

(56) Documents cités:
- US-A- 2 061 322
- US-A- 3 730 654
- US-A- 5 111 707

## Description

La présente invention concerne le domaine des machines tournantes nécessitant des redémarrages fréquents, comme révélé dans US 2 061 322 A et correspondant au préambule de la revendication 1.

Un problème n'ayant que partiellement été résolu est celui du travail nécessaire à la mise en vitesse lors de la phase de démarrage au cours de laquelle le rapport de réduction entre un arbre d'entrée et un arbre de sortie, habituellement idéal pour un régime permanent, ne convient pas.

Il est connu des systèmes de boîte de vitesses, de dérailleur de bicyclette ou de poulie à flasque variable.

Ces systèmes ont l'inconvénient d'être complexes ou d'être toujours en fonction, même en régime permanent.

Il manque donc un système simple à réduction continûment décroissante, se terminant par un rapport final de 1:1 en prise directe avec plus aucun organe en mouvement interne.

Ce but est atteint par un réducteur mécanique coaxial à réduction continûment décroissante utilisant une pluralité d'engrenages à rayons variables pour une phase de démarrage de machine tournante, et les dits engrenages sont à rayons uniformément variables, caractérisé en ce que le rapport de réduction en fin de phase de démarrage est de 1:1 en prise directe et en ce que le réducteur ne comporte plus de pièce en mouvement interne en fin de phase de démarrage.

Les engrenages à rayons variables et à entraxe constant sont bien connus dans le domaine des pompes, compresseurs et débitmètres, mais généralement leur courbe primitive est fermée pour permettre une rotation continue. Cela amène des variations croissantes et décroissantes du dit rayon, avec pour conséquence un rapport de réduction variant de la même façon.

La présente invention utilise des engrenages à rayons uniformément variables, ce qui entraîne un rapport de réduction également uniformément variable. De par leur conception, de tels engrenages présentent une discontinuité du rayon empêchant une rotation continue. Par contre, ils peuvent parfaitement fonctionner pendant une période transitoire. Pour optimiser l'amplitude angulaire utile, l'invention prévoit dans une forme préférentielle, des paires d'engrenages pouvant fonctionner tous les deux sur un tour complet, ce qui entraîne des paires d'engrenages symétriques et une possibilité de réengagement des dents, aussi appelé rengrènement, après arrêt au point de discontinuité.

Ces dits engrenages rappellent la forme d'une portion de spirale limitée à un tour polaire avec des rayons qui, pour des abscisses curvilignes égales des points leur correspondant, mesurées en partant de l'extrémité la plus proche, doivent présenter une somme constante égale à l'entraxe. On peut remarquer qu'une portion de spirale logarithmique dont le rayon est une fonction exponentielle de l'angle polaire, limitée à une variation de 360° de cet angle satisfait à cette condition, avec comme particularité d'avoir un vecteur vitesse ayant un angle constant avec le rayon.

Le rapport de réduction d'une telle paire d'engrenages varie continûment de r/R à R/r avec r et R correspondant au minimum et au maximum de la valeur du rayon qui se situent au niveau de la discontinuité.

Il est judicieux d'entraîner cette paire d'engrenages par un couple de pignons à rayons fixes présentant un rapport de R/r. On obtient donc une réduction variant de R/r x R/r = (R/r)² pour la position de départ, à R/r x r/R = 1 à l'approche de la discontinuité. Le grand pignon et l'engrenage menant sont axialement solidaires afin d'assurer l'entraînement précité. On remarque que l'engrenage final effectue un tour complet pour une rotation R/r fois plus grande et dans le même sens du petit pignon d'entrée.

Pour réaliser un système ne présentant, en fin de phase, plus aucune pièce en mouvement interne, l'invention prévoit que cet axe intermédiaire commun peut tourner autour de l'axe du petit pignon menant, comme par exemple avec un plateau porte-roue, avec un dispositif empêchant une rotation en sens contraire, et que les entraxes ont la même longueur. Ce dispositif peut être une roue à cliquet, un système à coincement, un arrêtoir, ou tout autre système connu en soi. L'axe de l'engrenage de sortie est donc le même que celui du petit pignon d'entrée, ce qui entraîne en fin de phase une rotation de l'ensemble en prise directe sans mouvement relatif interne.

La fin de la phase transitoire correspond à la fin d'une rotation de 360° des engrenages à rayons variables et du grand pignon. Un dispositif de blocage de rotation, qui peut être placé indifféremment sur n'importe laquelle de ces 3 roues, arrête alors le mécanisme et l'ensemble tourne alors autour de l'axe commun d'entrée et de sortie. La désactivation temporaire de ce dispositif permet au système de se replacer dans la position de départ pour une nouvelle phase transitoire à nouveau arrêtée après une nouvelle rotation de 360°. Il est également possible de conserver un blocage permanent en fin de phase et de revenir partiellement ou totalement en phase transitoire par une rotation inverse du pignon d'entrée si l'engrenage de sortie peut tourner également en sens inverse, ou par une rotation de l'axe intermédiaire dans le sens de fonctionnement avec l'engrenage de sortie bloqué, le pignon d'entrée effectuant alors la rotation inverse de celle qu'il a précédemment effectuée.

Une autre façon d'assurer ce blocage en fin de phase transitoire peut être réalisée sans dispositif dédié si le rapport final de transmission globale devient légèrement surmultiplicateur car le système privilégie alors la prise directe un peu avant la discontinuité. Cela est obtenu en choisissant le rapport des pignons d'attaque légèrement inférieur à R/r. Le déblocage pour replacer le système dans la position de départ se fait par un dispositif assurant la petite rotation interne supplémentaire nécessaire.

Le paragraphe qui suit traite des dérivées première et seconde du rayon des engrenages par rapport à l'angle polaire du point situé sur leur courbe primitive. La variation des rayons des engrenages peut être régulière pour engendrer une variation régulière du rapport de réduction, mais elle peut être modulée en fonction de leur rotation afin d'obtenir des vitesses de variation différentes du dit rapport. Cela peut être fonction du couple d'entrée dans le cas où celui-ci est variable. Un pédalier de bicyclette, par exemple, reçoit un couple différent selon la position des manivelles, maximum à l'horizontale et presque nulle aux points morts haut et bas. Dans ce cas, le rapport de réduction diminue plus vite quand le couple disponible est plus important. Les formes générales des engrenages restent des spirales, mais sur lesquelles apparaissent des variations locales du rayon.

Pour améliorer l'équilibrage du dispositif, on peut augmenter le nombre de roues autres que le pignon d'entrée en les distribuant de façon circulaire autour de l'axe commun entrée et sortie et en décalant longitudinalement les engrenages à rayons variables. Cela permet également d'augmenter le couple transmissible.

L'invention sera mieux comprise à la lumière de la description détaillée qui va suivre, en référence au dessin annexé dans lequel les figures représentent une forme particulière de réalisation de l'invention.

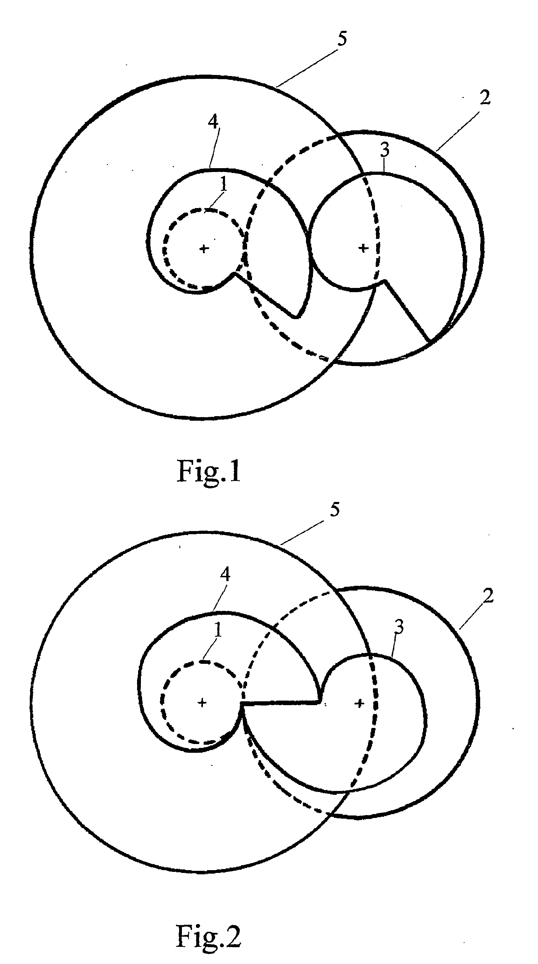

La figure 1 représente une vue de la partie active du réducteur côté sortie avec un fonctionnement dans le sens des aiguilles d'une montre. Le petit pignon 1 est le pignon d'entrée. Il attaque le grand pignon 2, représenté dans cet exemple avec une réduction de 3 et qui est axialement solidaire d'un engrenage menant 3 qui entraîne à son tour un engrenage mené 4, symétrique de l'engrenage 3 et ayant une courbe primitive qui est une portion de spirale logarithmique dont les extrémités ont été lissées par des arcs de cercle. Les rayons au point de discontinuité sont également dans un rapport de 3 et la règle de la somme des rayons restant constante et égale à l'entraxe pour des abscisses curvilignes égales à partir des extrémités est respectée. L'engrenage 4 est l'engrenage de sortie. Un plateau circulaire 5 assure la fonction de porte-roue pour les roues 2 et 3 et ne peut tourner que dans le sens des aiguilles d'une montre grâce à un dispositif non représenté. Le petit pignon d'entrée 1, le plateau porte-roue 5 et l'engrenage de sortie 4 sont non solidaires sur l'axe principal. Le grand pignon 2 et l'engrenage 3 sont solidaires sur l'arbre intermédiaire guidé fou par le plateau 5.

La position représentée en figure 1 correspond à une position intermédiaire avec une réduction de 3 x 2 =6.

La figure 2 représente la position de discontinuité correspondant à la fois au début de la phase de démarrage avec une réduction de 3 x 3 = 9 et à la position finale de blocage avec une réduction de 3 x 1/3 = 1

## Revendications

1. Réducteur mécanique coaxial à réduction continûment décroissante utilisant une pluralité d'engrenage (3, 4) à rayons variables pour une phase de démarrage de machine tournante, et les dits engrenages (3, 4) sont à rayons uniformément variables, **caractérisé en ce que** le rapport de réduction en fin de phase de démarrage est de 1:1 en prise directe et **en ce que** le réducteur ne comporte alors plus de pièce en mouvement interne.

2. Réducteur selon la revendication 1 **caractérisé en ce que** les engrenages à rayons variables sont symétriques, **en ce qu'**il comprend deux pignons qui ont des axes communs avec les dits engrenages, et **en ce que** leur rapport est le même que le rapport entre les extrema des rayons des engrenages.

3. Réducteur selon la revendication 2 **caractérisé en ce qu'**il comprend un dispositif qui bloque la rotation des roues en fin de phase de démarrage au point de réduction minimum de 1:1 et la libère pour le rengrènement au point de réduction maximum.

4. Réducteur selon les revendications précédentes **caractérisé en ce que** les rayons variables des engrenages ont des vitesses de variations fonction de leur position angulaire.

5. Réducteur selon les revendications précédentes **caractérisé en ce qu'**il possède une pluralité d'engrenages décalés longitudinalement et répartis autour de l'axe commun d'entrée et de sortie.

## Claims

1. A coaxial mechanical reduction gearset with a continuously decreasing reduction ratio employing a plurality of variable-radius gears (3,4) for a phase of starting up a rotating machine, said gears having uniformly varying radii, **characterized in that** the reduction ratio at the end of the start-up phase is 1-1 in direct drive and **in that** the reduction gearset at that point then no longer has any internal moving part

2. The reduction gearset as claimed in claim 1, **characterized in that** the variable-radius gears are symmetric, **in that** it comprises two pinions which have axes common to said gears, and **in that** their ratio is the same as the ratio between the extrema of the radii of the gears

3. The reduction gearset as claimed in claim 2, **characterized in that** it comprises a device which blocks the rotation of the wheels at the end of the start-up phase at the minimum reduction point of 1:1 and releases it for reengagement at the point of maximum reduction.

4. The reduction gearset as claimed in the preceding claims, **characterized in that** the variable radii of the gears have rates of variation that are functions of their angular position

5. The reduction gearset as claimed in the preceding claims, **characterized in that** it possesses a plurality of gears offset longitudinally and distributed about the common input and output axis

## Patentansprüche

1. . Koaxiales mechanisches Untersetzungsgetriebe mit kontinuierlich abnehmender Untersetzung, wobei eine Vielzahl von Zahnräder (3, 4) variabler Radien für die Startphase einer rotierenden Maschine verwendet wird und diese Zahnräder (3, 4) einheitlich variable Radien aufweisen, **dadurch gekennzeichnet, dass** das Verhältnis der Untersetzung am Ende der Startphase **1:1 im Direktantrieb ist und das Untersetzungsgetriebe dann kein Teil mehr mit** Eigenbewegung am Ende der Startphase umfasst.

2. . Untersetzungsgetriebe nach Anspruch 1 **dadurch gekennzeichnet, dass** die Zahnräder mit variablen Radien symmetrisch sind, dass es zwei Ritzel umfasst, die mit den Zahnrädern gemeinsame Achsen haben und dass ihr Verhältnis dasselbe ist wie das Verhältnis zwischen den Maxima der Radien der Zahnräder

3. . Untersetzungsgetriebe nach Anspruch 2 **dadurch gekennzeichnet, dass** es eine Vorrichtung umfasst, die die Rotation der Räder am Ende der Startphase am Punkt der Mindestuntersetzung von 1:1 blockiert und sie für das Wiedereinrücken am Punkt der maximalen Untersetzung freigibt.

4. . Untersetzungsgetriebe nach den vorstehenden Ansprüchen **dadurch gekennzeichnet, dass** die variablen Radien der Zahnräder Wechselgeschwindigkeiten haben, die sich als Funktion ihrer Winkelposition verändern

5. . Untersetzungsgetriebe nach den vorstehenden Ansprüchen **dadurch gekennzeichnet, dass** es eine Vielzahl von Zahnrädern aufweist, die längs verschoben und um die gemeinsame Antriebs- und Abtriebsachse verteilt sind.
